# EUROPEAN PATENT APPLICATION

(11) **EP 3 189 964 A1**
(43) Date of publication of application: **12.07.2017**
(21) Application number: 16002749.6
(22) Date of filing: 28.12.2016
(51) Int. Cl.: B32B 17/10, G01S 17/93, G01S 7/481

(54) **LAMINATED GLASS**

(30) Priority: 06.01.2016 JP 2016000982
(71) Applicant: ASAHI GLASS COMPANY, LIMITED, Tokyo 100-8405 (JP)
(72) Inventor: Hamano, Tadashi, Tokyo, 100-8405 (JP); Yajima, Toshimi, Tokyo, 100-8405 (JP)
(74) Representative: Müller-Boré & Partner Patentanwälte PartG mbB

(57) **Abstract**

The present invention provides a laminated glass which is effective in reducing signal distortions or the like when signals of reception or transmission to an information device 102 mounted in a vehicle 100 pass through the laminated glass. The laminated glass includes a first glass plate 10, a second glass plate 20, and an interlayer 30 interposed between the first glass plate 10 and the second glass plate 20. The first glass plate 10 includes a first main surface 11 arranged on a side opposite to the interlayer 30 and a second main surface 12 in contact with the interlayer 30, while the second glass plate 20 includes a third main surface 21 in contact with the interlayer 30 and a fourth main surface 22 arranged on a side opposite to the interlayer 30. In at least one of a first region located on the first main surface and a second region located on the fourth main surface, which are passing regions where signals of reception or transmission to the information device 102 mounted in the vehicle 100 pass through, a glass-surface smoothness is ensured and signal distortions and the like due to the glass itself can be eliminated.

## Description

### CROSS-REFERENCE TO RELATED APPLICATIONS

This application claims priority from Japanese Patent Application No. 2016-000982 filed on January 6, 2016, the entire subject matter of which is incorporated herein by reference.

### BACKGROUND OF THE INVENTION

### Technical Field

The present invention relates to a laminated glass for use as, for example, the windshields of vehicles.

### Background Art

A technique is known in which an information device such as, for example, a camera is mounted in a vehicle and information signals concerning road conditions, etc. are transmitted and received through a laminated glass (e.g., the windshield of the vehicle) (see Patent Document 1).

Patent Document 1 discloses a laminated glass for use as a windshield wherein an upper peripheral part thereof includes a shade part equipped with an observation window for a surveillance camera, the laminated glass being obtained by fitting a transparent synthetic resin having substantially the same shape as the observation window into a hole, heating a butt-joint boundary therebetween with hot air to soften the synthetic resin interposed between a plurality of glass plates and cause the transparent synthetic resin to stick to the transparent synthetic resin, and cooling the boundary to unite the synthetic resins with each other while preventing the boundary from having defects such as air bubbles or transmission distortions.

Patent Document 1: JP-A-2006-96331

### BRIEF SUMMARY OF THE INVENTION

However, in Patent Document 1, attention was directed to the butt-joint boundary of an interlayer. There has been a problem in that neither any adverse influence of the glass itself on signals nor any adverse influence of the laminated glass on signals in the whole signal transmission region has been taken into account.

The present invention provides a laminated glass which is effective in reducing signal distortions or the like when signals of reception or transmission to an information device mounted in a vehicle pass through the laminated glass.

The laminated glass in the present invention includes a first glass plate and a second glass plate bonded to the first glass plate with an interlayer disposed therebetween, the laminated glass including a first main surface of the first glass plate arranged on a side opposite to the interlayer, a second main surface of the first glass plate being in contact with the interlayer, a third main surface of the second glass plate being in contact with the interlayer, a fourth main surface of the second glass plate arranged on a side opposite to the interlayer, a first region located on the first main surface, and a second region which is located on the fourth main surface and at least a part of which overlaps the first region in a plane view, wherein at least one of the first region and the second region has an arithmetical mean height of roughness profile Ra of 0.5 µm or less, a mean length of roughness-profile elements RSm of 40 µm or less, an arithmetical mean height of waviness profile Wa of 10 µm or less, and a mean length of waviness-profile elements WSm of 60 mm or less, as provided for in JIS B 0601:2013.

According to the present invention, it is possible to provide a laminated glass which is effective in reducing signal distortions or the like when signals of reception or transmission to an information device mounted in a vehicle pass through the laminated glass.

### BRIEF DESCRIPTION OF THE DRAWINGS

FIG. 1 is a diagrammatic view which shows an application of a laminated glass according to the present invention.
FIG. 2A to FIG. 2C show a first embodiment of the laminated glass according to the present invention: FIG. 2A is a side view of a part of the laminated glass; FIG. 2B is an enlarged cross-sectional view of a portion A of FIG. 2A; and FIG. 2C is a diagrammatic view for illustrating a relationship with an information device.
FIG. 3 is a schematic front view of a vehicle which shows stripes of a laminated glass according to the present invention.
FIG. 4A to FIG.4C show examples of the windshields of vehicles, regarding definitions of a normal line and a cross-section: FIG. 4A is a schematic front view of a windshield of a common vehicle; FIG. 4B is a schematic slant view of a windshield of a bus or the like; and FIG. 4C is a schematic cross-sectional view of a windshield of an open convertible or the like.
FIG. 5 shows a glass-surface waveform of a laminated glass according to the present invention which includes a waviness profile and a roughness profile both provided for in JIS B 0601:2013.
FIG. 6 is a schematic front view of a vehicle showing a second embodiment of the laminated glass according to the present invention.
FIG.7A is a side view of a part of the windshield of FIG. 6, and FIG.7B is an enlarged cross-sectional view of a portion A of FIG. 7A.
FIG. 8A to FIG. 8B show relationships between first convex part and second convex part of black shielding films formed in a laminated glass according to the present invention; FIG. 8A is a front view of Example 1 and FIG. 8B is a rear view of Example 2.
FIG. 9A to FIG. 9B show relationships between first cut-out region and second cut-out region of black shielding films formed in a laminated glass according to the present invention; FIG. 9A is a front view of Example 1 and FIG. 9B is a rear view of Example 2.

### DETAILED DESCRIPTION OF THE INVENTION

Specific embodiments of the laminated glass according to the present invention are explained below in detail by reference to the drawings.

### (First Embodiment)

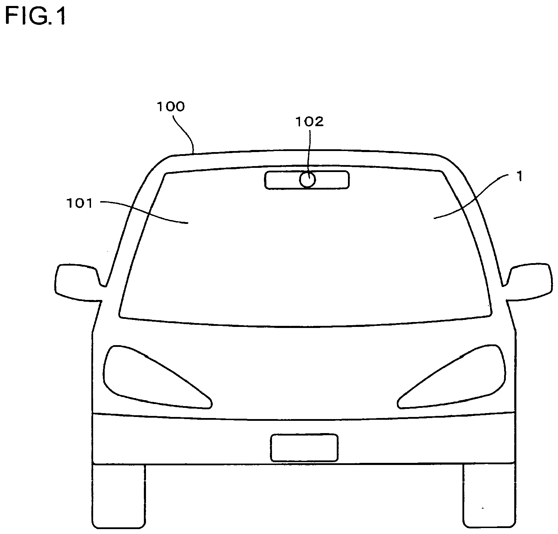

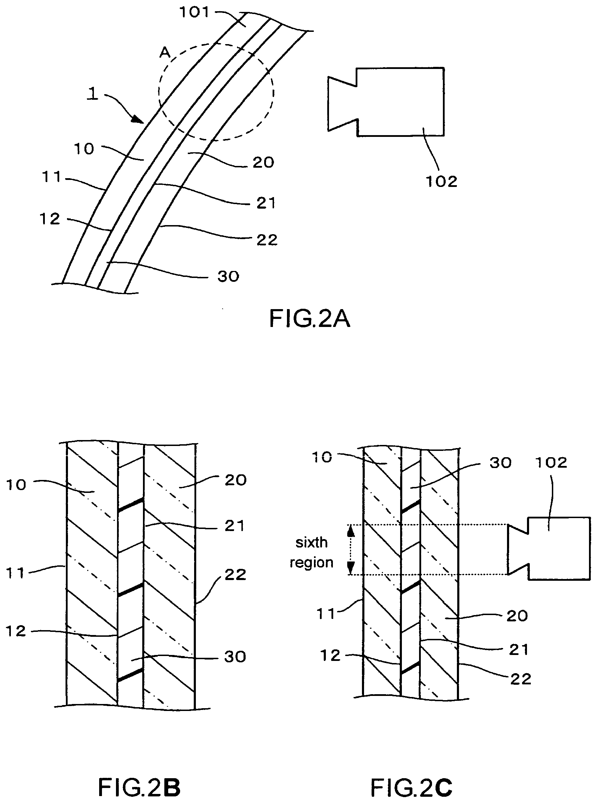

FIG. 1 is a diagrammatic view which shows an application of a laminated glass according to this embodiment. FIG. 2A to FIG. 2C show a first embodiment of the laminated glass according to the present invention: FIG. 2A is a side view of a part of the laminated glass; FIG. 2B is an enlarged cross-sectional view of a portion A of FIG. 2A; and FIG. 2C is a diagrammatic view for illustrating a relationship with an information device. Using FIG. 1 and FIG. 2, an example of the first embodiment of the laminated glass is explained in detail.

The laminated glass 1 according to this embodiment is to be mounted mainly as a windshield 101 of a vehicle 100, e.g., a motor vehicle. In recent years, vehicles 100 are each equipped with an information device 102 mounted therein in order to ensure driving safety. The information device 102 is a device for preventing a rear-endcollision and a collision against something existing ahead of the vehicle, e.g., a vehicle ahead, pedestrian, obstacle, etc., or for letting a driver know a danger, by means of a camera, radar, etc. The information device 102 includes an information-receiving device and/or an information-transmitting device, and signals are sent and received through the laminated glass 1 using a millimeter-wave radar, a stereo-camera, an infrared laser, or the like. The term "signals" means electromagnetic wave including millimeter wave, visible light, infrared light, and the like.

The laminated glass 1 includes a first glass plate 10, a second glass plate 20, and an interlayer 30 interposed between the first glass plate 10 and the second glass plate 20. The first glass plate 10 includes a first main surface 11 arranged on a side opposite to the interlayer 30 and a second main surface 12 in contact with the interlayer 30, while the second glass plate 20 includes a third main surface 21 in contact with the interlayer 30 and a fourth main surface 22 arranged on a side opposite to the interlayer 30.

The term "region" is used herein below in the following manners. A region located on the first main surface 11 is defined as "first region"; a different region located on the first main surface 11 is defined as "non-first region"; a region which is located on the fourth main surface 22 and at least a part of which overlaps the first region in a plane view is defined as "second region"; and a different region located on the fourth main surface 22 is defined as "non-second region". Furthermore, a region in the first glass plate 10 through which signals of reception or transmission to the information device 102 mainly pass is defined as "third region"; a region in the second glass plate 20 through which the signals mainly pass is defined as "fourth region"; and a region in the interlayer 30 through which the signals mainly pass is defined as "fifth region". Moreover, a region where the third region, fourth region, and fifth region overlap each other in a plane view is defined as "sixth region". The "first region", "second region", "non-first region", and "non-second region" are definitions mainly for surface regions of the laminated glass 1, while the "third region", "fourth region", "fifth region", and "sixth region" are definitions in which a thickness direction of the laminated glass 1 is also taken into account.

In cases where the sixth region is a transmission region for signals of reception or transmission to at least one of an information-receiving device and an information-transmitting device, a passing region for the signals can be specified.

So long as the first region and the second region are located on the sixth region, a region which is highly smooth and a region where a refractive index of the second glass plate 20 and a refractive index of the interlayer 30 are close to a refractive index of the first glass plate 10 overlap each other and, hence, adverse influences on the signals are further lessened. A detailed explanation thereon will be given later.

The sixth region serves also as a passing region for signals of reception or transmission to the information device 102, which is at least one of an information-receiving device and an information-transmitting device. Concepts of the regions overlap with each other, and there are, for example, cases where a proportion of the third region is close to a proportion of the first region (third region ≈ first region) or where a proportion of the fourth region is close to a proportion of the second region (forth region ≈ second region).

The first region described above may be the whole of or some of the first main surface 11, and the second region may be the whole of or some of the forth main surface 22. The first region and the second region may be located on the sixth region.

The laminated glass 1 is produced by a known float process. In a float process, a molten base material is floated on a molten metal, e.g., tin, to form a flat glass having an even thickness and an even width by a strict temperature operation. A surface which is in direct contact with the molten metal is defined as "bottom surface", while an opposite surface is defined as "top surface". In this embodiment, the first main surface 11 and the fourth main surface 22 are "bottom surfaces", and the second main surface 12 and the third main surface 21 are "top surfaces". Because of this, the first main surface 11 and the fourth main surface 22 have higher smoothness than the second main surface 12 and the third main surface 21. Conversely, the second main surface 12 and the third main surface 21 have lower smoothness than the first main surface 11 and the fourth main surface 22. This is because the smoothness of the bottom surface is governed only by a relationship between the surface tension of the glass and the tin, whereas the smoothness of the top surface is determined by the surface tensions of the glass and air and by influences of other various factors of the external environment.

In the laminated glass 1 according to this embodiment, the second main surface 12 and the third main surface 21, which are "top surfaces", are disposed so as to face each other and bonded to each other, with an interlayer 30 interposed therebetween, and the first main surface 11 and the fourth main surface 22, which are "bottom surfaces", are disposed so as to constitute both outer surfaces. The surface smoothness of the laminated glass 1 is thus enhanced. In other words, an amount of tin, used as the molten metal, in the second main surface 12 and the third main surface 21 is considered to be smaller than an amount of tin in the first main surface 11 and fourth main surface 22. It is also considered that although the second main surface 12 and the third main surface 21, which are "top surfaces", have lower smoothness than the first main surface 11 and the fourth main surface 22, the low smoothness is compensated for by the interlayer 30.

Since the first main surface 11 and the fourth main surface 22, which are outer surfaces of the laminated glass 1, are smooth, it is possible to minimize frequency distortions or image distortions with respect to the signals of reception or transmission to the information device 102 mounted in an interior of a vehicle 100. It is hence possible to eliminate actuation errors or the like due to signal distortions.

Examples of compositions of the first glass plate 10 and the second glass plate 20 used in this embodiment include a glass having a composition which includes, as represented by mole percentage based on oxides, from 50 to 80% of SiO₂, from 0 to 10% of B₂O₃, from 0.1 to 25% of Al₂O₃, from 3 to 30% of Li₂O+Na₂O+K₂O, from 0 to 25% of MgO, from 0 to 25% of CaO, from 0 to 5% of SrO, from 0 to 5% of BaO, from 0 to 5% of ZrO₂, and from 0 to 5% of SnO₂. However, the compositions thereof are not particularly limited.

It is preferable that a thickness of the first glass plate 10 and a thickness of the second glass plate 20 should be 0.2 mm or more and 5.0 mm or less, more preferably 0.3 mm or more and 4.0 mm or less, even more preferably 0.5 mm or more and 2.0 mm or less. The thickness of the first glass plate 10 and the thickness of the second glass plate 20 may be the same or different. In the case where the thickness of the first glass plate 10 and the thickness of the second glass plate 20 are different, it is preferable that the thickness of the second glass plate 20 is thinner than the thickness of the first glass plate 10.

More specific examples thereof include the following glass compositions (1) to (5). Incidentally, for example, the expression "containing from 0 to 25% of MgO" means that MgO, although not essential, may be contained in an amount of up to 25%.
(1) A glass having a composition which includes, as represented by mole percentage based on oxides, from 63 to 73% of SiO₂, from 0.1 to 5.2% of Al₂O₃, from 10 to 16% of Na₂O, from 0 to 1.5% of K₂O, from 5 to 13% of MgO, and from 4 to 10% of CaO.
(2) A glass having a composition which includes, as represented by mole percentage based on oxides, from 50 to 74% of SiO₂, from 1 to 10% of Al₂O₃, from 6 to 14% of Na₂O, from 3 to 11% of K₂O, from 2 to 15% of MgO, from 0 to 6% of CaO, and from 0 to 5% of ZrO₂ and in which a total content of SiO₂ and Al₂O₃ is 75% or less, a total content of Na₂O and K₂O is from 12 to 25%, and a total content of MgO and CaO is from 7 to 15%.
(3) A glass having a composition which includes, as represented by mole percentage based on oxides, from 68 to 80% of SiO₂, from 4 to 10% of Al₂O₃, from 5 to 15% of Na₂O, from 0 to 1% of K₂O, from 4 to 15% of MgO, and from 0 to 1% of ZrO₂.
(4) A glass having a composition which includes, as represented by mole percentage based on oxides, from 67 to 75% of SiO₂, from 0 to 4% of Al₂O₃, from 7 to 15% of Na₂O, from 1 to 9% of K₂O, from 6 to 14% of MgO, and from 0 to 1.5% of ZrO₂ and in which a total content of SiO₂ and Al₂O₃ is from 71 to 75%, a total content of Na₂O and K₂O is from 12 to 20%, and a content of CaO, if it is contained, is less than 1%.
(5) A glass having a composition which includes, as represented by mole percentage based on oxides, from 60 to 70% of SiO₂, from 0 to 10% of B₂O₃, from 8 to 15% of Al₂O₃, from 10 to 17% of Na₂O, from 0 to 3% of K₂O, from 0 to 10% of MgO, from 0 to 1% of CaO, and from 0 to 1% of ZrO₂ and in which a total content of SiO₂ and Al₂O₃ is from 76 to 81% and a total content of Na₂O and K₂O is from 13 to 16%.

The interlayer 30 may have a composition which is in general use in conventional laminated glasses for vehicles. For example, a thermoplastic resin of poly(vinyl butyral) (PVB), an ethylene-vinyl acetal (EVA) copolymer, or the like can be used. Use may be made of a thermosetting resin which is liquid before heating. Namely, the interlayer 30 may be in a liquid state or the like before the first glass plate 10 and the second glass plate 20 are bonded to each other, so long as the interlayer 30 is in a layer state after the laminated glass 1 is configured.

A thickness of the interlayer 30 may be, for example, from 0.5 to 4 mm. The interlayer 30 having such a thickness is suitable for use.

An interlayer 30 into which an infrared ray absorber is incorporated may be used in order to inhibit an interior temperature from rising. Examples of a material of the infrared ray absorber include fine particles including any of metals such as Sn, Sb, Ti, Si, Zn, Zr, Fe, Al, Cr, Co, Ce, Cs, In, Ni, Ag, Cu, Pt, Mn, Ta, W, V, and Mo, oxides, nitrides, or sulfides of these metals, and such substances doped with Sb or F. Any one of these finely particulate substances may be used alone, or a composite thereof may be used. Use may also be made of a mixture obtained by mixing any one of these substances or a composite thereof with an organic resin or a coated substance obtained by coating any one of those substances or a composite thereof with an organic resin. Furthermore, a colorant, dye, organic substance (phthalocyanine or naphthalocyanine), or the like may be used as an infrared ray absorber.

A content of the infrared ray absorber is not specifically limited, but a lower limit of the content is preferably 0.001 parts by weight and an upper limit of the content is preferably 5.0 parts by weight on a basis of 100 parts of a thermoplastic resin, which is a main component of a film-forming material. In the case where the content of the infrared ray absorber is less than 0.001 parts by weight, the interlayer 30 is possibly incapable of shielding the infrared rays. In the case where the content of the infrared ray absorber is more than 5 parts by weight, the laminated glass 1 is subject to have a poor transparency.

For a purpose of inhibiting the laminated glass 1 from oscillating due to microvibrations, a sound-insulating interlayer 30 having a low modulus of shearing elasticity may be used. Such a sound-insulating interlayer 30 may include superposed layers differing in the modulus of shearing elasticity. In the case where the laminated glass 1 is used as a head-up display, the interlayer 30 may be a wedge-shaped interlayer 30 having a cross-section which at least partly has a wedge shape, from the standpoint of preventing an occurrence of double images.

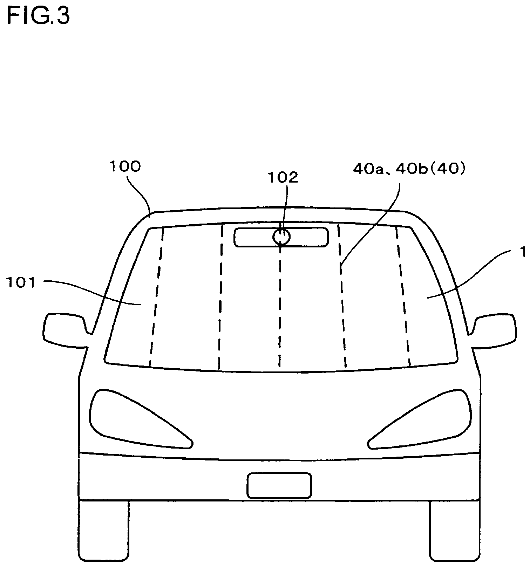

FIG. 3 is a schematic front view of a vehicle 100 which shows an example of stripes 40 of a laminated glass 1.

In cases where a glass plate is produced by a float process, one or more stripes 40 are inevitably formed in the glass along a flow direction of the glass plate on manufacturing. In the case of using the glass plate as a windshield 101 of a vehicle 100, it is desirable that the glass plate should be disposed so that the stripes 40 extend along an upside and downside direction which is the direction from a roof toward an engine room of the vehicle 100, in order to diminish distortions when a driver or other person sees through the windshield 101. This upside and downside direction is defined as a first direction.

The first glass plate 10 has one or more first stripe 40a, and the second glass plate 20 has one or more second stripe 40b. It is therefore desirable that both the first stripe 40a and the second stripe 40b should extend along the first direction. Meanwhile, the first direction can be defined as a direction perpendicular to a cross-section in which a radius of curvature of the first main surface is minimum among cross-sections T each including a normal line S at a center of gravity G of the laminated glass 1. In general, a driver frequently shifts looking directions between near points and far points in a running direction (vertical shifts of points to be looked at) rather than shifts looking directions along a right-hand and left-hand direction. Consequently, since the stripes 40 extend along the upside and downside direction of the vehicle 100, the driver is less apt to notice the stripes 40 of the laminated glass.

Especially in the case where the signals are images, it is desirable that the first stripe40a and the second stripe 40b should both extend along the upside and downside direction of the vehicle 100. This is because the images obtained change as the vehicle runs. By arranging the first glass plate 10 and second glass plates 20 so that the stripe 40a and stripe 40b extend in the same direction as a running direction of the vehicle, image distortions can be minimized.

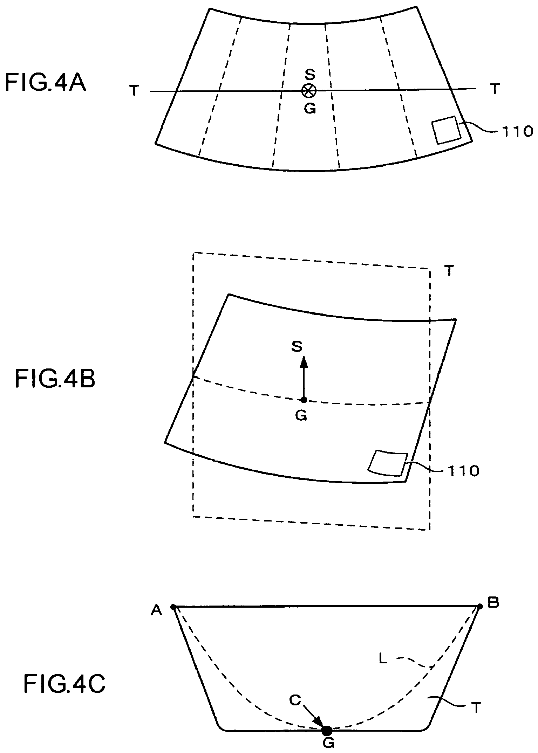

FIG. 4A to FIG. 4C show examples of the windshields 101 of vehicles 100, regarding definitions of a normal line and a cross-section: FIG. 4A is a schematic front view of the windshield 101 of a common vehicle 100; FIG. 4B is a schematic slant view of the windshield 101 of a bus or the like; and FIG. 4C is a schematic cross-sectional view of the windshield 101 of an open convertible or the like.

FIG. 4A shows the windshield 101 of a common vehicle 100. There are a center of gravity G and a normal line S in the vicinity of a center, and there is a cross-section T which minimizes a radius of curvature of the first main surface 11 along a longitudinal direction. A direction perpendicular to the cross-section T is the first direction.

FIG. 4B shows a rectangular windshield 101 of a bus or the like. There are a center of gravity G and a normal line S in the vicinity of a center, and there is a cross-section T which minimizes a radius of curvature of the first main surface 11 along a vertical direction. A direction perpendicular to the cross-section T is the first direction.

FIG. 4C is a schematic cross-sectional view of the windshield 101 of an open convertible or the like in which the windshield is fixed to no pillars and is bent at a large angle in two portions. In this case, by determining end points A and B on an edge and a point C at the center of gravity G, and determining a curve L which connects the three points, a radius of curvature of this curve L is taken as the radius of curvature of the first main surface 11. A cross-section which minimizes this radius of curvature is taken as a cross-section T, and a direction which is perpendicular to the cross-section is the first direction.

In the windshield 101 of FIG. 4A, an upper side and a lower side differ in length. A side having a smaller length can be defined as the upper side, and a side having a larger length can be defined as the lower side. Thus, with respect to a windshield 101 which is not mounted on a vehicle 100 and exists alone, the upper side and the lower side can be defined, and also the first direction can be defined.

FIG. 4A and FIG. 4B show windshields 101 each bearing a test certificate 110. The test certificate 110 may be a J IS mark which certifies that the windshield 101 satisfies the JIS standards or a certificate which shows the time when the product was produced, trade name of the glass, etc., and is mainly disposed in a left-hand lower position or right-hand lower position. Examples of the test certificate 110 include ones of a kind formed by marking by forming flaws in the glass with sandblast at the time of glass production and ones of a kind formed by printing at the time of glass production. Consequently, with respect to a windshield 101 which is not mounted on a vehicle 100 and exists alone, a side which is near a position where the test certificate 110 is disposed can be defined as the lower side and a side which is far from that position can be defined as the upper side, and also the first direction can be defined.

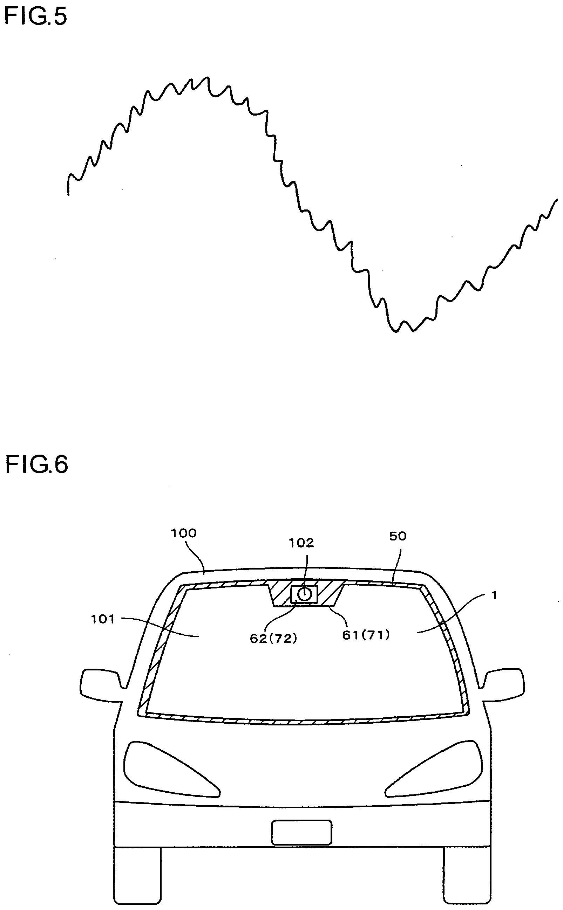

FIG. 5 is a glass-surface waveform of a laminated glass 1 according to this embodiment, the glass-surface waveform including a waviness profile and a roughness profile both provided for in JIS B 0601:2013. Using FIG. 5, the waviness profile and roughness profile of the laminated glass 1 are explained.

Although the surface of the laminated glass 1 is a smooth surface, a microscopic examination thereof shows that the surface is made up of consecutive recesses and protrusions. FIG. 5 is a view which schematically shows one of such rugged surfaces, and it can be seen that the surface as a whole has waviness. A waviness profile can be derived as a waveform by arithmetically averaging the waviness. An average of absolute values of height in a sampling length of the waviness profile is defined as Wa, and a dimension of each wavelength of a waviness profile is defined as a mean length of waviness-profile elements WSm. Meanwhile, a waveform for a minute range of the rugged surface can be derived as a roughness profile by arithmetical averaging. An average of absolute values of height in a sampling length of a roughness profile is defined as Ra, and a dimension of each wavelength of a roughness profile is defined as a mean length of roughness-profile elements RSm.

In this embodiment, at least one of the first region and the second region, which is passing regions where signals of reception or transmission to the information device 102 pass through, satisfies the following: an average of absolute values of height in a sampling length of the roughness profile Ra is 0 µm or more and 0.5 µm or less, a mean length of roughness-profile elements RSm is 0 µm or more and 40 µm or less, an average of absolute values of height in a sampling length of the waviness profile Wa is 0 µm or more and 10 µm or less, and a mean length of waviness-profile elements WSm is 0 mm or more and 60 mm or less, as provided for in JIS B 0601:2013. Thus, in at least one of the first region and the second region, which are passing regions where signals of reception or transmission to the information device 102 pass through, a glass-surface smoothness is ensured and signal distortions and the like due to the glass itself can be eliminated.

An average of absolute values of height in a sampling length of the roughness profile Ra is preferably 0 µm or more and 0.3 µm or less, more preferably 0 µm or more and 0.15 µm or less. A mean length of roughness-profile elements RSm is preferably 0 µm or more and 30 µm or less, more preferably 0 µm or more and 20 µm or less.

An average of absolute values of height in a sampling length of the waviness profile Wa is preferably 0 µm or more and 8 µm or less, more preferably 0 µm or more and 5 µm or less. A mean length of waviness-profile elements WSm is preferably 0 mm or more and 50 mm or less, more preferably 0 mm or more and 40 mm or less.

Meanwhile, at least one of the non-first region and the non-second region, which are regions where signals of reception or transmission to the information device 102 do not pass through, may satisfy the following:
an arithmetical mean height of the roughness profile Ra is larger than 0.5 µm, a mean length of roughness-profile elements RSm is larger than 40 µm, an arithmetical mean height of the waviness profile Wa is larger than 10 µm, and a mean length of waviness-profile elements WSm is larger than 60 mm, as provided for in JIS B 0601:2013.

A surface roughness measurement can be made with an atomic force microscope (AFM) or a laser displacement meter.

In the case where the laminated glass 1 has insufficient smoothness, it is possible to use a method in which after two glass plates, i.e., the first glass plate 10 and the second glass plate 20, are laminated to each other, a polishing step is conducted to attain given smoothness. In the polishing step, the whole surface need not be polished. Namely, only the first region and the second region, which are regions where signals of reception or transmission to the information device 102 pass through, are polished, and the non-first region and the non-second region need not be polished. Since only signal transmission regions which are required to have smoothness may be polished, there is no need to give any special treatment to the non-first region and the non-second region. A reduction in working time can hence be attained.

The third region of the first glass plate 10 has a first refractive index, the fourth region of the second glass plate 20 has a second refractive index, and the fifth region of the interlayer 30 has a third refractive index. It is desirable that the second refractive index and the third refractive index should be in a range of ±2.8%, exclusive of +2.8% and -2.8%, with respect to the first refractive index as a center. The second refractive index and the third refractive index are preferably within ±2%, more preferably within ±1%, most preferably within ±0.5% with respect to the first refractive index as a center. This means that refractive indexes of the second glass plate 20 and interlayer 30 are close to the refractive index of the first glass plate 10. By regulating the refractive indexes thereof to such values, the laminated glass 1 is rendered less apt to adversely affect the signals from or to the information device 102.

### (Second Embodiment)

FIG. 6 is a schematic front view of a vehicle which shows an example of a second embodiment of the laminated glass 1 of the present invention. The second embodiment of the laminated glass 1 is described in detail using FIG. 6 to FIG. 9B.

In the second embodiment, a black shielding film 50 of, for example, a ceramic is formed in a peripheral region of the laminated glass 1. A first black shielding film 60 is formed in a peripheral region of the first glass plate 10, and a second black shielding film 70 is formed in a peripheral region of the second glass plate 20. The first black shielding film 60 has a first convex part 61 which is formed so as to protrude from the first black shielding film 60 into an in-plane direction of the first glass plate 10, while the second black shielding film 70 has a second convex part 71 which is formed so as to protrude from the second black shielding film 70 into an in-plane direction of the second glass plate 20. More specifically, the first convex part 61 and the second convex part 71 is formed on a side which faces the longest side of the laminated glass 1, i.e., on an upper side of the laminated glass 1 mounted on a vehicle 100.

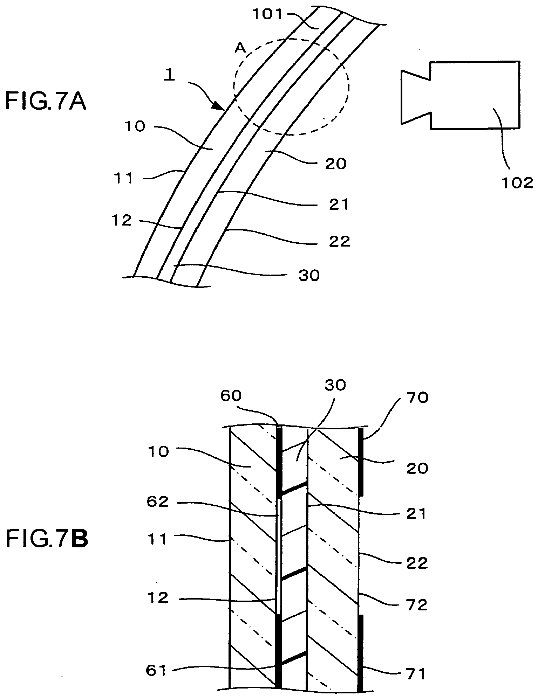

As shown in FIG. 7A and FIG. 7B, in this embodiment, the first convex part 61 is disposed on the second main surface 12 of the first glass plate 10, and the second convex part 71 is disposed on the fourth main surface 22 of the second glass plate 20. The first convex part 61 has a first cut-out region 62, while the second convex part 71 has a second cut-out region 72.

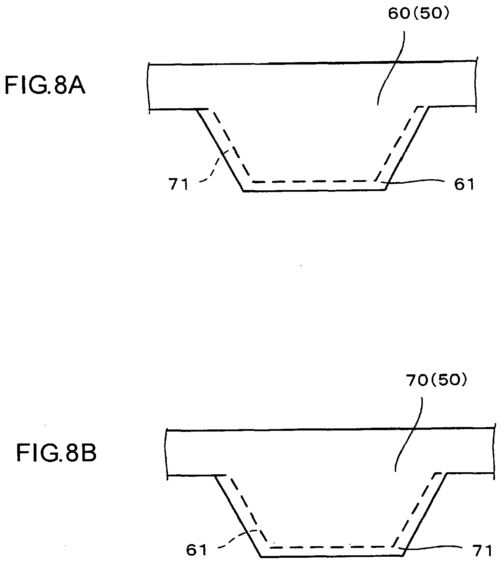

Furthermore, as shown in FIG. 8A and FIG. 8B, the first convex part 61 and the second convex part 71 overlap with each other in a plane view, and a state of overlapping is not limited. Example 1 for the first convex part 61 and second convex part 71 shows that the first convex part 61 includes the second convex part 71 in a plane view (see FIG. 8A). Example 2 shows that the second convex part 71 includes the first convex part 61 in a plan view (see FIG. 8B).

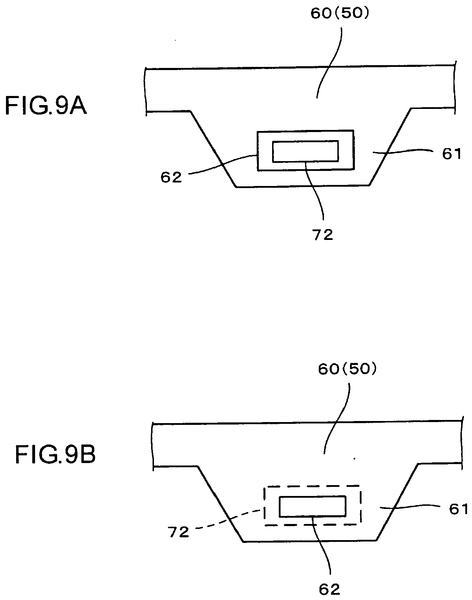

As shown in FIG. 9A and FIG. 9B, the first cut-out region 62 and the second cut-out region 72 overlap with each other in a plane view and a state of overlapping is not limited, as in relationships between the first convex part 61 and the second convex part 71. Example 1 for the first cut-out region 62 and second cut-out region 72 shows that the first cut-out region 62 includes the whole second cut-out region 72 in a plane view (see FIG. 9A). Example 2 shows that the second cut-out region 72 includes the whole first cut-out region 62 in a plane view (see FIG. 9B).

Although the black shielding film 50 is disposed in a peripheral region of the laminated glass 1 from the standpoints of decoration, etc., the black shielding film 50 can be utilized when upon manufacture two flat glass plates, i.e., a first glass plate 10 and a second glass plate 20, are stacked and heated with a heater to allow the glass plates to bend, due to own weight, into a shape conforming to the shape of, for example, the windshield 101 of a vehicle 100. If a black shielding film 50 is disposed on one glass plate only, this glass plate only is excessively bent, resulting in a strain. The occurrence of such strain is hence eliminated by disposing a black shielding film 50 on each of the two glass plates.

By providing double black shielding films of the first black shielding film 60 and second black shielding film70 which constitute the first convex part 61 and second convex part 71, the information device 102 disposed in a vicinity of the windshield 101 can be concealed. By disposing the first cut-out region 62 and second cut-out region 72, a passing region for signals from or to the information device 102 can be ensured.

A gradation pattern can be provided in portions of at least either of the first black shielding film 60 surround the first cut-out region 62 and second black shielding film 70 the second cut-out region 72. A gradation pattern can be obtained, for example, by disposing a plurality of dots on at least one of the first black shielding film 60 and the second black shielding film 70 so that a density of the dots changes from a high density to a low density.

Although one use example of this embodiment is described above with respect to the windshield 101 of a vehicle 100, the laminated glass may be used as a rear glass. In the case of use as a rear glass, the laminated glass 1 serves to allow signals of reception or transmission to an information device 102, e.g., a camera or a radar, to pass there through, the information device 102 being for ascertaining the state of the rear of the vehicle 100 or for attaining a safe backward movement.

The present invention should not be construed as being limited to the embodiments described above, and modifications, improvements, etc. can be suitably made therein. Materials, shapes, dimensions, numerical values, configurations, numbers, positions, etc. of each constituent element in each of the embodiments described above are at will and not limited so long as the present invention can be achieved.

### Industrial Applicability

The laminated glass of the invention is suitable for use as vehicle-mounted laminated glasses capable of transmitting signals from or to information devices while minimizing signal distortions.

While the present invention has been described in detail and with reference to specific embodiments thereof, it will be apparent to one skilled in the art that various changes and modifications can be made therein without departing from the spirit and scope thereof.

### Description of Reference Numerals and Signs

1 Laminated glass
10 First glass plate
11 First main surface
12 Second main surface
20 Second glass plate
21 Third main surface
22 Fourth main surface
30 Interlayer
40 Stripes
40a First stripe
40b Second stripe
50 Black shielding film
60 First black shielding film
61 First convex part
62 First cut-out region
70 Second black shielding film
71 Second convex part
72 Second cut-out region
102 Information device (information-receiving device and/or information-transmitting device)
110 Test certificate

## Claims

1. A laminated glass comprising:
a first glass plate; and
a second glass plate bonded to the first glass plate with an interlayer disposed therebetween,
the laminated glass comprising:
a first main surface of the first glass plate arranged on a side opposite to the interlayer;
a second main surface of the first glass plate being in contact with the interlayer;
a third main surface of the second glass plate being in contact with the interlayer;
a fourth main surface of the second glass plate arranged on a side opposite to the interlayer;
a first region located on the first main surface; and
a second region which is located on the fourth main surface and at least a part of which overlaps the first region in a plane view,
wherein at least one of the first region and the second region has an arithmetical mean height of roughness profile Ra of 0.5 µm or less, a mean length of roughness-profile elements RSm of 40 µm or less, an arithmetical mean height of waviness profile Wa of 10 µm or less, and a mean length of waviness-profile elements WSm of 60 mm or less, as provided for in JIS B 0601:2013.

2. The laminated glass according to claim 1, wherein the second main surface and the third main surface are top surfaces and the first main surface and the fourth main surface are bottom surfaces.

3. The laminated glass according to claim 1 or 2, comprising:
a non-first region different from the first region located on the first main surface; and
a non-second region different from the second region located on the fourth main surface,
wherein at least one of the non-first region and the non-second region has an arithmetical mean height of roughness profile Ra of larger than 0.5 µm, a mean length of roughness-profile elements RSm of larger than 40 µm, an arithmetical mean height of waviness profile Wa of larger than 10 µm, and a mean length of waviness-profile elements WSm of larger than 60 mm, as provided for in JIS B 0601:2013.

4. The laminated glass according to any one of claims 1 to 3, wherein
the first glass plate has one or more first stripes,
the second glass plate has one or more second stripes, and
the first stripe and the second stripe both extend in a first direction,
the first direction being a direction perpendicular to a cross-section in which a radius of curvature of the first main surface is minimum among cross-sections each including a normal line at a center of gravity of the laminated glass.

5. The laminated glass according to claim 4, wherein the first direction is an upside and downside direction for the laminated glass mounted on a vehicle.

6. The laminated glass according to any one of claims 1 to 5, wherein
a third region of the first glass plate has a first refractive index,
a fourth region of the second glass plate has a second refractive index, and
a fifth region of the interlayer has a third refractive index,
the laminated glass having a sixth region where the third region, the fourth region, and the fifth region overlap each other in a plane view,
wherein the second refractive index and the third refractive index are in a range of ±2.8%, exclusive of +2.8% and -2.8%, with respect to the first refractive index as a center.

7. The laminated glass according to claim 6, wherein the sixth region is a transmission region for signals of reception or transmission to at least one of an information-receiving device and an information-transmitting device.

8. The laminated glass according to claim 6 or 7, wherein the first region and the second region are located on the sixth region.
